# EUROPEAN PATENT APPLICATION

(11) **EP 0 899 243 A1**
(43) Date of publication of application: **03.03.1999**
(21) Application number: 98306556.6
(22) Date of filing: 18.08.1998
(51) Int. Cl.: C03B 37/027, C03B 37/018

(54) **Process for drawing an optical fiber from a large diameter preform**

(30) Priority: 28.08.1997 US 57806 P; 05.11.1997 US 964927
(71) Applicant: LUCENT TECHNOLOGIES INC., Murray Hill, New Jersey 07974-0636 (US)
(72) Inventor: Glodis, Paul Francis, Atlanta, Georgia 30309 (US); Walker, Kenneth Lee, New Providence, New Jersey 07974 (US)
(74) Representative: Johnston, Kenneth Graham

(57) **Abstract**

Fiber is drawn from a glass preform having a diameter of about 60 mm or greater, formed from an MCVD process, such that the glass passes through the neck-down region at a rate of about 20 g/min or greater. The invention reflects the finding that glass of a large diameter preform should be passed through the neck-down region at a relatively fast rate that reduces the extent of oxygen diffusion. Reducing such oxygen diffusion, it is believed, substantially maintains transition metal impurity atoms in their most oxidized valence state, and thereby reduces the impurities' detrimental effect on losses. Using the process of the invention, it is possible to obtain commercially desirable losses, e.g., 0.23 dB/km or less at 1550 nm, from large diameter preforms capable of producing over 200 km of 125 µm diameter fiber.

## Description

### CROSS-REFERENCE TO RELATED APPLICATION

This application claims priority of Provisional Application Serial No. 60/057806 filed September 4, 1997.

### BACKGROUND OF THE INVENTION

### Field of the Invention

The invention relates to fabrication of optical fiber, in particular fabrication of optical fiber from large diameter preforms.

### Discussion of the Related Art

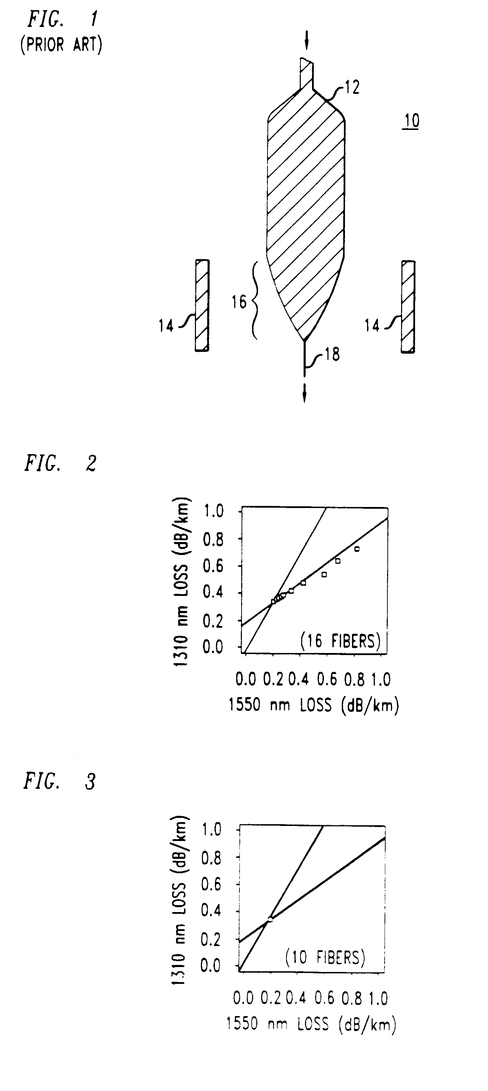

Optical fiber is produced from a glass preform, the preform typically consisting of a doped silica core surrounded by an inner silica cladding and a silica overcladding. As reflected in Fig. 1, and discussed in F. DiMarcello et al. "Fiber Drawing and Strength Properties," Optical Fiber Communications, Vol. 1, Academic Press, Inc., 1995, at 179-248, the preform 12 is generally arranged vertically in a draw tower 10 such that a portion of the preform 12 is lowered into a furnace region 14 that typically heats the preform 12 to temperatures around 2200°C. The portion of the preform 12 placed into the furnace region 14 begins to melt, and the lower end of the preform 12 forms what is known as the neck-down region 16, which is where the preform glass flows from the original cross-sectional area of the preform 12 to the desired cross-sectional area of the fiber 18. From the lower tip of this neck-down region 16, the optical fiber 18 is drawn. As the preform glass is drawn into fiber 18, the preform 12 continues to be lowered into the furnace region 14, until the preform 12 is exhausted.

Clearly, the need to interrupt this fiber drawing process to put a new preform in place reduces efficiency of the process and reduces the consistency of the resultant fiber. Since the length of preforms is somewhat limited by the processes used to make the preforms, large diameter preforms capable of producing relatively large amounts of fiber, e.g., greater than 100 km, are desirable. In fact, the commercial need to raise the fiber yield from a single preform has resulted in an increase in the standard preform diameter every two to three years for preforms containing cores made by a modified chemical vapor deposition (MCVD) process. (The MCVD process is discussed in U.S. Patent Nos. 4,217,027; 4,262,035; and 4,909,816, the disclosures of which are hereby incorporated by reference. MCVD involves passing a high-purity gas, e.g., a mixture of gases containing silica and germanium, through the interior a pre-formed silica tube (known as the substrate tube) while heating the outside of the tube with a traversing oxyhydrogen torch. In the heated area of the tube, a gas phase reaction occurs that deposits particles on the tube to form the core material. Once deposition is complete, the body is sintered to densify the glass core particles, the substrate tube is collapsed, and a consolidated body is obtained in which the substrate tube constitutes the inner cladding material. To obtain a finished preform, an overcladding tube is typically placed over the core/inner cladding rod, and the components are heated and collapsed into a solid, consolidated preform.)

Currently, relatively large, approximately 50 mm diameter, 1 m long MCVD preforms, capable of producing about 140 km of 125 µm diameter optical fiber, are used in large scale optical fiber manufacturing. Commercial requirements to further increase yield and cut costs are expected to push the industry to even larger diameter preforms. Yet, the parameters for consistently obtaining commercially acceptable fibers from such larger diameter preforms are not known. Problems encountered with the current preforms will undoubtedly be exacerbated in larger diameter preforms, and new, unforeseen problems are also likely to arise. Thus, improved processes for drawing fiber from preforms of ever-increasing diameter, particularly the process parameters that will allow the large scale production of high-quality, low-loss fiber from such larger diameter preforms, are desired.

### SUMMARY OF THE INVENTION

The rate at which glass of an MCVD preform flows through the neck-down region during fiber draw was found to have a significant effect on the properties of the resultant fiber. Specifically, a rate of about 20 g/min or greater allows attainment of relatively low losses not obtainable with slower rates. (The rate at which the glass passes through the neck-down region is the rate at which the preform glass flows through a plane that intersects the neck-down region and that is oriented substantially perpendicular to the preform's long axis.) According to the invention, a silica glass fiber preform having a diameter of about 60 mm or greater is provided, the preform comprising a core fabricated by an MCVD process, and then fiber is drawn from the preform such that the silica glass passes through the neck-down region at a rate of about 20 g/min or greater, thereby producing a fiber having a loss of about 0.23 dB/km or less at 1550 nm.

In particular, it was found that the rate at which the glass passes through the neck-down region appears to have an effect on losses caused by transition metal impurities in the core of the resultant glass fiber. It is known that transition metals such as iron, copper, and nickel tend to increase losses in glass optical fiber, particularly when the metal impurities are located in or near the core of the fiber. See, e.g., P.C. Schultz, "Optical Absorption of the Transition Elements in Vitreous Silica," Journal of the American Ceramic Society, Vol. 57, No. 7. Yet, transition metal impurities are unavoidable in glass fiber preforms due to the presence of transition metals in the available raw materials and in the metallic equipment used to produce the preforms. The transition metals typically form oxides within the glass preform.

Although a precise atomistic description of the invention's effect in reducing attenuation losses is not possible, the loss reduction apparently relates to the presence, and valence states, of transition metal impurities located in or near the core of the fiber. It is believed that transition metals in their most oxidized state (e.g., Fe⁺³ in Fe₂O₃) generally result in lower losses than when in a more reduced state (e.g., Fe⁺² in FeO). At the high temperatures needed to induce neck-down and to draw fiber from a glass preform, it is believed that some of the oxygen atoms tend to diffuse out of the oxide molecules, leaving the transition metal atoms in more reduced form, e.g., Fe₂O₃ to FeO, CuO to Cu₂O. Where the glass's time in the neck-down region is short, e.g., for preforms of relatively small diameter, it is expected that the oxygen does not travel far and is therefore available to recombine with some of the transition metal oxide molecules in or near the core upon cooling of the fiber. This recombination restores many of the transition metal atoms to a more oxidized state and results in lower optical attenuation, i.e., lower losses. However, larger diameter preforms, e.g., 60 mm or more in diameter, must undergo a large change from the original diameter of the preform to the diameter of the drawn fiber. Because of this large change, the glass spends more time in the neck-down region and thus more time at elevated temperatures. It is believed that during this extended time in the neck-down region the oxygen diffuses far enough away from the core such that a number of the transition metal atoms in or near the core remain in a reduced valence state upon cooling. In such a reduced valence state, the transition metal atoms are believed to increase losses in the fiber.

The invention thus reflects the finding that glass of a large diameter preform should be passed through the neck-down region at a relatively fast rate - about 20 g/min or greater - in order to produce fiber having acceptably low losses. This rate appears to reduce the extent of oxygen diffusion in the preform, which in turn substantially maintains impurity atoms in their most oxidized valence states. Maintaining these oxidized states is believed to reduce the impurities' detrimental effect on losses, thereby making it possible to draw fiber exhibiting commercially desirable losses of about 0.23 dB/km or less at 1550 nm from large MCVD preforms having diameters of about 60 mm or greater.

### BRIEF DESCRIPTION OF THE DRAWINGS

Fig. 1 shows a conventional method for drawing optical fiber from a glass preform.

Fig. 2 shows losses from fiber drawn for comparative purposes.

Fig. 3 shows losses from fiber drawn according to the invention.

Fig. 4 shows losses from fiber drawn for comparative purposes.

### DETAILED DESCRIPTION OF THE INVENTION

As discussed in the DiMarcello et al. article cited previously, and as shown in Fig. 1, fiber is typically drawn by placing a preform 12 in a draw tower 10, and lowering the preform 12 into a furnace region 14 having a cylindrical configuration (to provide substantially equivalent heating). The furnace 14 typically contains a zirconia or graphite susceptor attached to a radio frequency (RF) generator, or a graphite susceptor heated by electrical resistance. Other materials and heating methods are known to those skilled in the art. As the preform 12 is lowered into the furnace region 14, the glass entering the furnace region 14 is heated, typically to temperatures of about 1900 to about 2300°C. The heated glass begins to flow, forming a neck-down region 16 exhibiting a continuously decreasing cross sectional area, i.e., the glass in the furnace region 14 roughly takes the shape of an inverted cone. From the lower tip of the neck-down region 16, the fiber 18 is drawn.

According to the invention, a silica glass fiber preform having a diameter of about 60 mm or greater is provided, the preform comprising a core fabricated by an MCVD process. Fiber is drawn from the preform such that the silica glass passes through the neck-down region at a rate of about 20 g/min or greater, thereby producing a fiber having a loss of about 0.23 dB/km or less at 1550 nm. Advantageously, the losses are about 0.205 dB/km or less at 1550 nm.

Preforms having diameters of about 60 mm, with a length of about 1 m, are capable of producing over 200 km of 125 µm diameter optical fiber, which is the current diameter of standard glass transmission fiber. It is expected that current trends will push MCVD preforms from diameters of abut 60 mm to diameters of about 120 mm over the next 6-8 years. Standard 125 µm diameter transmission fiber will typically have a 6 to 12 µm diameter silica core doped with a refractive index-raising material such as germanium. The core is normally surrounded by a 6 to 16 µm thick silica inner cladding, which is optionally doped with a refractive index-lowering material such as fluorine, and an undoped silica glass overcladding around the inner cladding. The preforms used for producing such standard fiber contain a core, inner cladding, and outer cladding of the same scale. The invention is not limited to such standard optical fiber, and preform structures suitable for producing a variety of optical fibers are known to those skilled in the art.

One skilled in the art is able to calculate the grams of glass passing through the neck down region with knowledge of the dimensions of the fiber, the rate at which the fiber is drawn, and the density of silica. The density of pure silica and lightly-doped silica is about 2.2 to 2.3 g/cm³.

It was found that the rate at which the preform glass passes through the neck-down region appears to affect losses in the fiber caused by transition metal impurities in the silica glass. Typical transition metals found in preforms include iron, copper, nickel, cobalt, and chromium, which are introduced by corrosion of delivery lines and components, or impurities in raw materials. The effect of transition metals in increasing losses in fibers is known, as discussed in Schultz, referenced previously. For example, as reflected in Figure 2 of Schultz, it is possible for Fe impurity atoms in a reduced state to increase losses in standard 125 µm diameter optical transmission fiber by 0.01 to 0.02 dB/km at about 1550 nm when present in concentrations as low as 0.1 Fe atoms per billion. However, as also reflected in Figure 2 of Schultz, Fe in its oxidized state (+3) results in losses at 1550 nm that are more than 30 times lower than Fe⁺². The cores of typical MCVD glass preforms used for producing such 125 µm diameter fiber contain transition metal impurities in amounts ranging from about 1 to about 100 impurity atoms per billion. Transition metal impurities typically form oxides in the silica glass, and, due to the abundance of oxygen in the glass, the transition metals are normally found in their most oxidized valence states. This impurity problem is most severe for preforms containing core rods made by an MCVD process because MCVD does not benefit from the long dehydration and sintering times used in conventional outside vapor deposition (OVD) and conventional vapor axial deposition (VAD) processes. The lengthy dehydration and sintering of OVD and VAD result in substantial purification of the preform glass.

At the high temperatures used to induce neck-down in the furnace region of a fiber draw tower, some of the oxygen atoms, it is believed, diffuse out of the oxide molecules, leaving the transition metal atoms in a reduced state, e.g., Fe₂O₃ to FeO, CuO to Cu₂O, Co₂O₃ to CoO. For preforms having diameters of about 60 mm or greater, the glass spends a substantial amount of time in the neck-down region, compared to smaller preforms, to allow for reduction of the glass from the preform diameter to the fiber diameter. For these large diameter preforms, it is believed that the oxygen diffuses away from transition metal atoms located in or near the core to an extent that impedes restoration of the metal atoms to their most oxidized valence states. Upon cooling of the drawn fiber, therefore, many of these transition metal atoms remain in reduced states that are believed to cause increased losses in the fiber. The existence of reduced valence states in elements other than transition metals is also believed to increase losses in the resultant fibers, but to a much lesser extent.

The process of the invention, by passing the preform glass through the neck-down region at a rate of about 20 g/min or greater, reduces the extent of oxygen diffusion away from the transition metal atoms. It is believed that this reduced oxygen diffusion results in a lower number of transition metal atoms in reduced valence states located in or near the core, and that a fiber with desirable loss is thereby formed. This result is reflected in the example below. It is expected that the required rate for passing the preform through the neck-down region will depend, at least in part, on the level of impurities in the preform. For example, it is possible that a preform having an unusually high level of impurities will require a rate far in excess of 20 g/min, e.g., perhaps up to about 60 g/min, whereas a typical preform will produce desirable fiber at a rate of about 20 g/min.

The invention will be further clarified by the following example, which is intended to be purely exemplary.

### Example

Four preforms were formed from an identical, conventional MCVD process. The preforms had a diameter of 63 mm, and contained a 4.2 mm diameter, germanium-doped silica core, an inner silica cladding, and an undoped silica overcladding. The preforms were placed into conventional draw towers and heated to about 2000°C in an RF zirconia furnace. Fiber having a diameter of 125 µm was drawn in a conventional manner, using a tension of 90 g. Two preforms were drawn such that the preform glass passed through the neck-down region at a rate of about 16 g/min, and two such that the glass passed through the neck-down region at a rate of about 23 g/min.

Spectral loss curves for the resultant fibers were generated with a standard cutback technique known to those skilled in the art, on a Photon Kinetics PK2500 set. Fig. 2 shows the 1310 nm and 1550 nm losses for 16 fiber samples drawn at a rate of about 16 g/min, and Fig. 3 shows the 1310 nm and 1550 nm losses for 10 fiber samples drawn at a rate of about 23 g/min. (Several of the data points overlap, and thus the results from each individual sample are not seen on the graphs.) The losses for the fiber drawn at the slower rate are significantly higher.

In examining the reasons for the higher losses in the slower-rate fibers, it was noted that the data points from appeared to fall along straight lines for both the 1310 nm and 1550 nm measurements. Thus, it seemed that specific mechanisms with particular spectral shapes were responsible for the high losses exhibited. Experiences with a variety of fibers and fiber preforms have shown that losses due to transition metal impurities in the core typically fall along the two lines inserted in Fig. 2 and in Fig. 3. (The higher slope line matches results typically seen for Fe contamination, and the lower slope line matches results typically seen for contamination by Ni or a combination of Ni and another element (possibly Cu or Cr).) It is apparent that the data points from the above slow-rate samples appreciably match the inserted lines, indicating that transition metal impurities were most likely the cause of the increased loss.

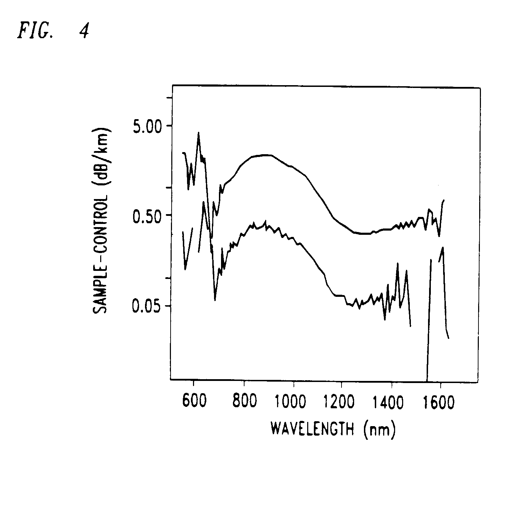

Fig. 4 shows losses at shorter wavelengths for fiber drawn at the slower rate. (The losses shown in the Figure represent the difference between the measured losses and the loss of a low-loss control fiber.) For these shorter wavelength measurements, a relatively short 2000 m fiber sample from each of the two preforms was used to keep the total loss at each wavelength within the dynamic range of the less test set. In addition, three 12 mm diameter fiber loops were used to suppress mode transition structure during the testing. Although one sample exhibited better losses than the other, Fig. 4 clearly shows a broad bump peaking at about 875 mm for both samples. This peak is also characteristic of transition metals (possibly Cu and/or Cr).

This example shows that for preforms prepared by identical processes using the same raw materials, a difference in the rate at which the preform glass passed through the neck-down region resulted in significantly different losses in the resultant fiber. The rate of about 23 g/min consistently produced a fiber exhibiting losses of less than 0.23 dB/km at 1550 nm.

## Claims

1. A process for fabricating optical fiber, comprising the steps of:
providing a silica glass fiber preform having a diameter of about 60 mm or greater, the preform comprising a core fabricated by a modified chemical vapor deposition process; and
drawing optical fiber from the silica glass fiber preform such that about 20 g/min or more of the silica glass passes through the neck-down region of the preform, wherein the resultant fiber exhibits an attenuation loss of about 0.23 dB/km or less at 1550 nm.

2. The process of claim 1, wherein the preform is capable of forming over 200 km of 125 µm diameter optical fiber.

3. The process of claim 1, wherein about 30 g/min or more of the silica glass passes through the neck-down region.

4. The process of claim 1, wherein the core of the preform contains transition metal impurities in an amount greater than 0.5 parts per billion.

5. The process of claim 1, wherein the optical fiber has a loss of about 0.205 dB/km or less at 1550 nm.

6. The process of claim 1, further comprising the step of heating at least a portion of the preform in a furnace comprising a susceptor that comprises a material selected from zirconia and graphite.

7. The process of claim 1, further comprising the step of heating at least a portion of the preform to a temperature ranging from about 1900 to about 2300°C.
